# EUROPÄISCHE PATENTSCHRIFT

(11) **EP 4 149 316 B1**
(45) Veröffentlichungstag und Bekanntmachung des Hinweises auf die Patenterteilung: **10.07.2024**
(21) Anmeldenummer: 21726853.1
(22) Anmeldetag: 11.05.2021
(51) Int. Cl.: A44B 11/25, B60R 22/185

(54) **GURTBESCHLAG FÜR EINE SICHERHEITSGURTEINRICHTUNG**
BELT FITTING FOR A SAFETY BELT DEVICE
RACCORD DE CEINTURE POUR UN DISPOSITIF DE CEINTURE DE SÉCURITÉ

(30) Priorität: 15.05.2020 DE 102020206133
(43) Veröffentlichungstag der Anmeldung: 22.03.2023
(73) Patentinhaber: VOLKSWAGEN AKTIENGESELLSCHAFT, 38440 Wolfsburg (DE)
(72) Erfinder: MÖKER, Carsten, 38471 Rühen (DE); LESSER, Falk, 38124 Braunschweig (DE); SCHÖNFISCH, Peter, 38486 Klötze (DE); WIDEL, Peter, 38442 Wolfsburg (DE); GLAS, Ernst, 38550 Isenbüttel (DE); OTTO, Michael, 38442 Wolfsburg (DE)
(86) Internationale Anmeldenummer: PCT/EP2021/062404
(87) Internationale Veröffentlichungsnummer: WO 2021/228803

(56) Entgegenhaltungen:
- WO-A1-2015/022214
- US-A- 4 023 826
- US-A1- 2007 138 783

## Beschreibung

Die Erfindung betrifft einen Gurtbeschlag für eine Sicherheitsgurteinrichtung in einem Fahrzeug nach dem Oberbegriff des Anspruches 1.

Die Sicherheitsgurteinrichtung eines Fahrzeugs kann beispielhaft einen Beckengurtabschnitt sowie einen diagonal über den Oberkörper des Fahrzeuginsassen verlaufenden Schultergurtabschnitt aufweisen. Der Beckengurtabschnitt ist bei angelegtem Sicherheitsgurt über zwei seitlich gegenüberliegende, untere Anbindungspunkte am Fahrzeugaufbau verankert. Üblicherweise ist der in der Fahrzeugquerrichtung innen positionierte Anbindungspunkt lösbar ausgeführt, und zwar mit einem am Beckengurt vorgesehene Gurtbeschlag, dessen Steckzunge in ein aufbauseitig verankertes Gurtschloss einsteckbar ist.

Aus der WO 2015/022214 A1 ist ein gattungsgemäßer Gurtbeschlag bekannt. Dieser weist einen Basisabschnitt und eine davon abragende Steckzunge auf. Der Basisabschnitt ist mit einer Gurtöse mit Gurtband-Lauffläche ausgebildet. Bei angelegtem Sicherheitsgurt ist die Gurtband-Lauffläche in Gleitkontakt mit einem durch die Gurtöse geführten Gurtband. Um in einem Lastfall eine stabile Gurtband-Querführung in der Gurtöse bereitzustellen, weist die Gurtband-Lauffläche eine entsprechend realisierte Oberflächenkontur auf. Die Gurtband-Lauffläche geht ferner in der Gurtband-Querrichtung beidseitig an seitlichen gerundeten Eckbereichen in einen, der Gurtband-Lauffläche gegenüberliegenden Gurtösen-Rand über.

In einem Lastfall kann je nach Crashsituation eine übermäßig große Gurtkraft auf den angelegten Sicherheitsgurt einwirken. In diesem Fall kann es in dem, aus der WO 2015/022214 A1 bekannten Gurtbeschlag unter Umständen in der Gurtband-Lauffläche zu einer Querverschiebung des Gurtbandes bis in den Eckbereich der Gurtöse kommen. Hierdurch ergibt sich im Gurtösen-Eckbereich eine sehr starke Walkbeanspruchung des Gurtband-Materials. Die dadurch entstehende Reibenergie kann gegebenenfalls eine Kunststoff-Umspritzung (zum Beispiel aus PP oder aus PA) am Gurtösen-Eckbereich bzw. die Gurtbandfilamente des Gurtbands zum Schmelzen bringen.

Die Aufgabe der Erfindung besteht darin, einen Gurtbeschlag bereitzustellen, der im Vergleich zum Stand der Technik im Lastfall eine einwandfreie Betriebssicherheit gewährleistet.

Die Aufgabe ist durch die Merkmale des Anspruches 1 gelöst. Bevorzugte Weiterbildungen der Erfindung sind in den Unteransprüchen offenbart.

Gemäß dem kennzeichnenden Teil des Anspruches 1 ist an dem der Gurtband-Lauffläche gegenüberliegenden Gurtösen-Rand ein Verdrängungskörper ausgebildet, mit dem ein Gurtösen-Querschnitt reduzierbar ist. Der Verdrängungskörper wirkt als ein Abstandhalter für eine definierte Gurtösen-Schlitzhöhe, um ein Gurt-Umschlagen zu verhindern. Hierzu ragt der Verdrängungskörper in die Gurtöse ein, und zwar unter Reduzierung der Gurtösen-Schlitzhöhe. Der Verdrängungskörper ist in der Gurtband-Querrichtung beidseitig über einen Freiraum vom jeweiligen gerundeten Gurtösen-Eckbereich beabstandet. Bei einer im Lastfall erfolgenden Querverschiebung des Gurtbands kann dessen Rand störkonturfrei in den Gurtösen-Freiraum hineinverlagert werden, wodurch eine Walkbeanspruchung des Gurtband-Rands reduziert ist, so dass eine Beschädigung des Gurtbands aufgrund erhöhter Reibenergie vermieden werden kann.

In einer technischen Umsetzung kann zwischen der Gurtband-Lauffläche und dem am gegenüberliegenden Gurtösen-Rand ausgebildeten Verdrängungskörper ein Gurtband-Führungsspalt mit reduziertem Durchlassquerschnitt bereitgestellt sein. Der Gurtband-Führungsspalt geht in der Gurtbandquerrichtung beidseitig in den jeweiligen Gurtband-Freiraum über, der über einen ausgeweiteten Durchlassquerschnitt verfügt. Der jeweilige seitliche Gurtband-Freiraum kann mit einer Profilhöhe vom Gurtband-Führungsspalt in Richtung auf die Steckzunge hochgezogen sein.

In einer ersten Ausführungsvariante kann die Oberflächenkontur der Gurtband-Lauffläche in der Gurtband-Querrichtung konkav ausgebildet sein. Die konkave Oberflächenkontur kann in der Gurtbandquerrichtung einen mittigen Konturboden aufweisen, an dem beidseitig Konturflanken bis zu einem Laufflächen-Rand hochgezogen sind. Der Konturboden kann mit Bezug auf den Laufflächen-Rand um eine Konturtiefe zurückgesetzt sein.

Alternativ dazu kann die Oberflächenkontur der Gurtband-Lauffläche in der Gurtband-Querrichtung konvex ausgebildet sein. In diesem Fall kann die konvexe Oberflächenkontur in der Gurtband-Querrichtung einen mittigen Konturscheitel aufweisen, an dem beidseitig Konturflanken bis zu einem Laufflächen-Rand um eine Scheitelhöhe abfallen.

Alternativ zu einer konvexen oder konkaven Oberflächenkontur kann diese auch in der Gurtband-Querrichtung geradlinig ausgeführt sein.

In einer technischen Realisierung kann die Gurtband-Lauffläche unterteilt sein in einen, an der Gurtbeschlag-Vorderseite befindlichen vorderen Gurtband-Auslauf und in einen an der Gurtbeschlag-Rückseite befindlichen rückseitigen Gurtband-Auslauf. Die beiden Gurtband-Ausläufe können an einer gerundeten Stegfläche ineinander übergehen.

Um im Lastfall eine Querverschiebung des Gurtbands in der Gurtöse weitgehend zu verhindern, ist es bevorzugt, wenn die Oberflächenkontur alternativ und/oder zusätzlich ein Wellenprofil mit einem sinusförmigen Verlauf in der Gurtbandquerrichtung aufweist, bei dem die Wellentäler um eine Amplitudenhöhe von den Wellenbergen zurückgesetzt sind.

Die Laufflächen-Breite der Gurtband-Lauffläche liegt in etwa in einem Bereich von 46mm bis 50mm.

In einer ersten Ausführungsvariante kann die Amplitudenhöhe des Wellenprofils bei 0,8mm liegen, während eine Wellenlänge bei 6,9mm liegen kann. In diesem Fall kann die Anzahl der Wellenberge über die Laufflächen-Breite bei insgesamt acht Wellenbergen liegen. In einer zweiten Ausführungsvariante kann die Amplitudenhöhe bei 1,0mm liegen, während die Wellenlänge bei 4,0mm liegt. In diesem Fall können sich über die Laufflächen-Breite insgesamt etwa 13 Wellenberge ausbilden. In einer weiteren Ausführungsvariante kann die Amplitudenhöhe bei 0,5mm liegen, während die Wellenlänge bei 2,0mm liegt. In diesem Fall können sich über die Laufflächen-Breite insgesamt 25 Wellenberge ergeben.

In einer weiteren Ausführungsform kann die Oberflächenkontur ein in der Gurtband-Lauffläche ausgebildetes Rillenprofil aufweisen, bei dem in die Gurtband-Lauffläche Längsrillen eingearbeitet sind. Diese können in der Gurtband-Querrichtung über Längsrippen beabstandet sein. Im normalen Fahrbetrieb kann das Gurtband bei angelegtem Sicherheitsgurt in Gleitkontakt mit der Gurtband-Lauffläche sein, während die Rillenböden jeweils außer Kontakt mit dem Gurtband sind. Erst im Lastfall kann sich das Gurtband in die Rillen hineinverlagern, wodurch ein Kontakt zwischen dem Gurtband und dem jeweiligen Rillenboden bereitgestellt wird.

Jede der Längsrillen weist einen um eine Rillentiefe von der Gurtband-Lauffläche zurückgesetzten Rillenboden auf, von dem Seitenflanken hochgezogen sind, die an insbesondere gerundeten Übergangskanten in die Gurtband-Lauffläche übergehen. In einer ersten Ausführungsvariante kann die Rillentiefe bei 1,0mm liegen, während eine Rillenbreite bei 2,5mm liegen kann. Die Rippenbreite kann bei 2,0mm liegen. Die Rillentiefe und die Rillenbreite sind so auszulegen, dass Gurtbandbeschädigungen vermieden werden können.

In einer zweiten Ausführungsvariante kann die Längsrippen-Breite bei 2,0mm oder bei 3,0mm liegen, während die Längsrillen-Breite bei 3,5mm liegen kann und die Rillentiefe bei 2,0mm liegen kann. In diesem Fall können sich über die Laufflächen-Breite hinweg insgesamt sieben voneinander beabstandete Längsrippen befinden. In einer dritten Ausführungsvariante kann die Rillenbreite bei 1 1,0mm liegen, während die Rillentiefe bei 1,8mm liegen kann. Die Rippenbreite kann in einem Bereich zwischen 3,0mm und 4,5mm liegen. In diesem Fall befinden sich in der Gurtband-Lauffläche über deren Laufflächen-Breite verteilt insgesamt zwei voneinander beabstandete Längsrippen.

Der Gurtbeschlag kann aus zumindest einem Metallkörper und einer Kunststoff-Umspritzung aufgebaut sein (Hybrid-Bauweise). In diesem Fall kann bevorzugt der Rillenboden der jeweiligen Längsrille des Rillenprofils vom Metallkörper bereitgestellt sein, um die Oberflächen-Rauigkeit des Rillenbodens zu reduzieren. Demgegenüber kann die jeweilige Längsrippe aus Kunststoffmaterial gefertigt sein, der im Vergleich zu Rillenboden eine erhöhte Oberflächenrauigkeit aufweist.

In einer alternativen Ausführungsvariante kann der Rillenboden der jeweiligen Längsrille glattflächig ausgebildet sein oder alternativ mit Noppen ausgebildet sein. Diese können über eine Noppenhöhe vom Rillenboden abragen. Die Noppenhöhe kann bevorzugt kleiner bemessen sein als die Rillentiefe.

In einer Weiterbildung der Erfindung kann der Rillenboden der jeweiligen Längsrille des Rippenprofils einen Reibungskoeffizienten aufweisen, der größer bemessen ist als der Reibungskoeffizient der jeweiligen Längsrippe. In diesem Fall tritt im Lastfall eine erhöhte Haftreibung zwischen dem Gurtband und dem Rillenboden auf, damit das Gurtband im Lastfall nicht in Querrichtung verschoben wird.

Nachfolgend sind Ausführungsbeispiele der Erfindung anhand der beigefügten Figuren beschrieben.

Es zeigen:
- Fig. 1: einen Ausschnitt einer Dreipunkt-Sicherheitsgurteinrichtung in einer Gebrauchslage, bei der der Sicherheitsgurt am Fahrzeuginsassen angelegt ist;
- Fig. 2: eine Ansicht des lösbaren Gurtbeschlags in einer Schnittebene I-I aus der der Fig. 1;
- Fig. 3: eine Seitenansicht auf den Gurtbeschlag in Alleinstellung;
- Fig. 4 bis 15: jeweils unterschiedliche Ausführungsvarianten der Gurtband-Lauffläche des Gurtbeschlags.

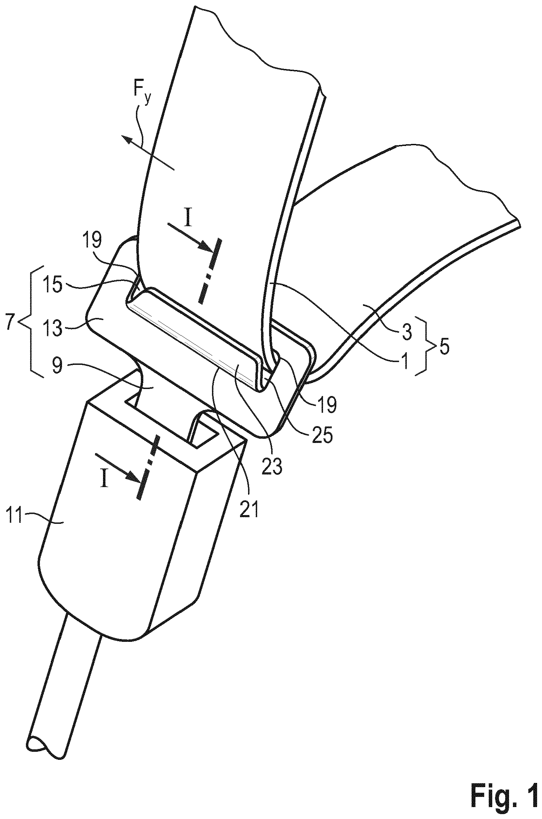

In der Fig. 1 ist die Dreipunkt-Sicherheitsgurteinrichtung in einer Gebrauchslage gezeigt, bei der der Sicherheitsgurt 5 am Fahrzeuginsassen angelegt ist. Der Sicherheitsgurt 5 weist einen Schultergurtabschnitt 1 und einen Beckengurtabschnitt 3 auf, die an einem Gurtbeschlag 7 ineinander übergehen. In der Fig. 1 ist der Fahrersitz sowie der Fahrzeuginsasse aus Gründen der Übersichtlichkeit nicht dargestellt. Das ebenfalls nicht gezeigte obere Ende des Schultergurtabschnittes 1 kann mit einem nicht dargestellten Retraktor verbunden sein, der zum Beispiel in der B-Säule angeordnet ist. Gemäß der Fig. 1 erstreckt sich der Beckengurtabschnitt 3 in der Fahrzeugquerrichtung y von einem nicht gezeigten äußeren Anbindungspunkt bis zu dem Gurtbeschlag 7, der mit seiner Steckzunge 9 in ein Gurtschloss 11 eingesteckt ist.

Der Gurtbeschlag 7 setzt sich aus einem Basisabschnitt 13 sowie der Steckzunge 9 zusammen. Der Basisabschnitt 13 des Gurtbeschlags 7 weist eine Gurtöse 15 mit einer Gurtband-Lauffläche 17 auf. Diese ist bei angelegtem Sicherheitsgurt 5 in Gleitkontakt mit dem durch die Gurtöse 15 geführten Gurtband.

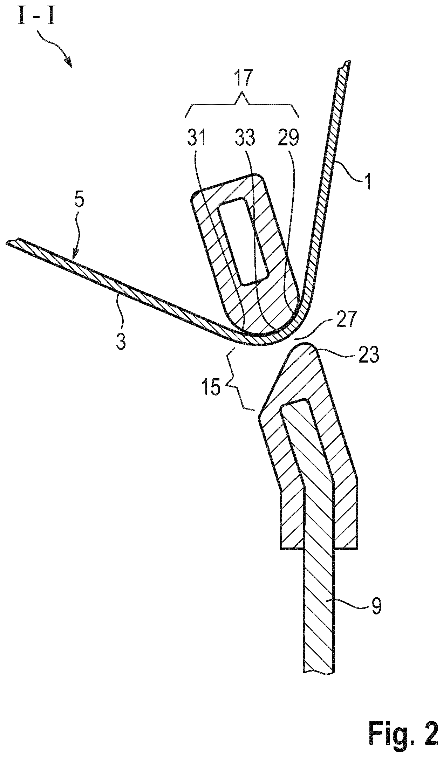

In der Fig. 2 geht die Gurtband-Lauffläche 17 in der Gurtband-Querrichtung beidseitig jeweils an einem seitlichen gerundeten Eckbereich 19 in einen Gurtösen-Rand 21 über, der der Gurtband-Lauffläche 17 gegenüberliegt.

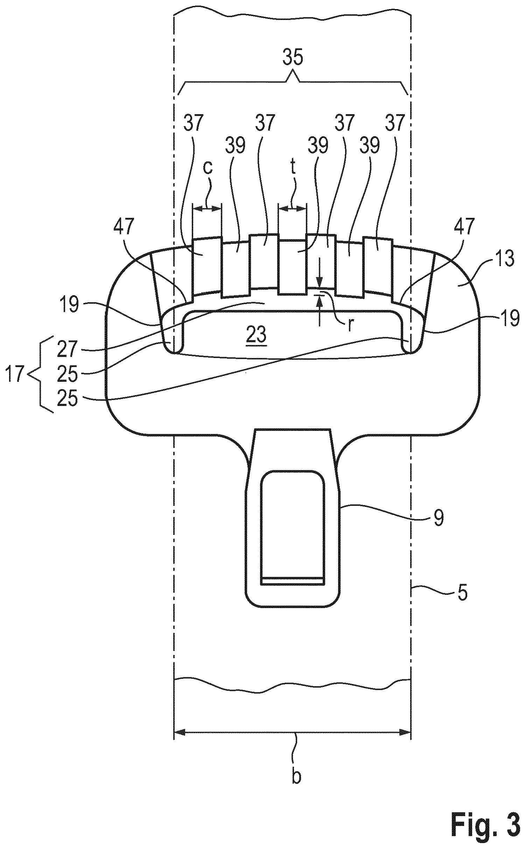

Wie aus der Fig. 1 hervorgeht, ist am Gurtösen-Rand 21 ein Verdrängungskörper 23 ausgebildet. Dieser reduziert eine Spaltbreite der Gurtöse 15. Der Verdrängungskörper 23 ist in der Gurtband-Querrichtung beidseitig jeweils über einen Gurtband-Freiraum 25 vom jeweiligen gerundeten Gurtösen-Eckbereich 19 beabstandet. Auf diese Weise ist zwischen der Gurtband-Lauffläche 17 und dem Verdrängungskörper 23 ein schlitzförmiger Gurtband-Führungsspalt 27 (Figur 2 oder 3) mit reduziertem Durchlassquerschnitt bereitgestellt, der in der Gurtband-Querrichtung beidseitig in den jeweiligen querschnittsgroßen Gurtband-Freiraum 25 übergeht. Der Gurtband-Freiraum 25 ist in der Fig. 3 um eine Profilhöhe h von dem Gurtband-Führungsspalt in Richtung auf die Steckzunge 9 hochgezogen.

Wie aus der Fig. 2 weiter hervorgeht, ist die Gurtband-Lauffläche 17 unterteilt in einen, an der Gurtbeschlag-Vorderseite ausgebildeten vorderen Gurtband-Auslauf 29 und in einen an der Gurtbeschlag-Rückseite ausgebildeten rückseitigen Gurtband-Auslauf 31. Die beiden Gurtbande-Ausläufe 29, 31 gehen an einer gerundeten Stegfläche 33 ineinander über.

Erfindungsgemäß weist die Gurtband-Lauffläche 17 in der Figur 3 eine Oberflächenkontur 35 auf, die in einem Lastfall eine weitgehend stabile Gurtband-Querführung in der Gurtöse 15 bereitstellt. Mit Hilfe der Oberflächenkontur 35 der Gurtband-Lauffläche 17 wird im Lastfall einer auf das Gurtband wirkenden Querlastkomponente F_{y} (Figur 1) entgegengewirkt.

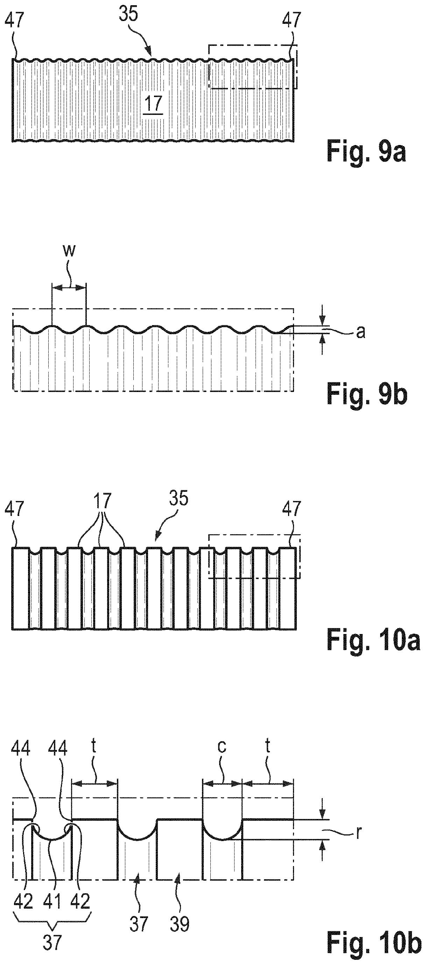

Nachfolgend wird anhand der Fig. 3 eine besonders bevorzugte Ausführungsvariante der Oberflächenkontur 35 beschrieben: Demzufolge weist die Oberflächenkontur 33 ein in der Gurtband-Lauffläche 17 ausgebildetes Rillenprofil auf, bei dem in die Gurtband-Lauffläche 17 insgesamt vier Längsrillen 37 eingearbeitet sind. Die Längsrillen 37 sind in der Gurtbandquerrichtung über drei Längsrippen 39 voneinander beabstandet. Die Laufflächenbreite b liegt in der Fig. 3 in einem Bereich zwischen 46mm und 50mm. Jede der Längsrillen 37 weist einen Rillenboden 41 (Figur 10b) auf, der um eine Rillentiefe r von der Gurtband-Lauffläche 17 zurückgesetzt ist. Die Rillentiefe r liegt bevorzugt bei 1,8mm, während eine Rippenbreite t bei ca. 3,0mm liegt und die Rillenbreite c in einen Bereich von 11mm liegen kann.

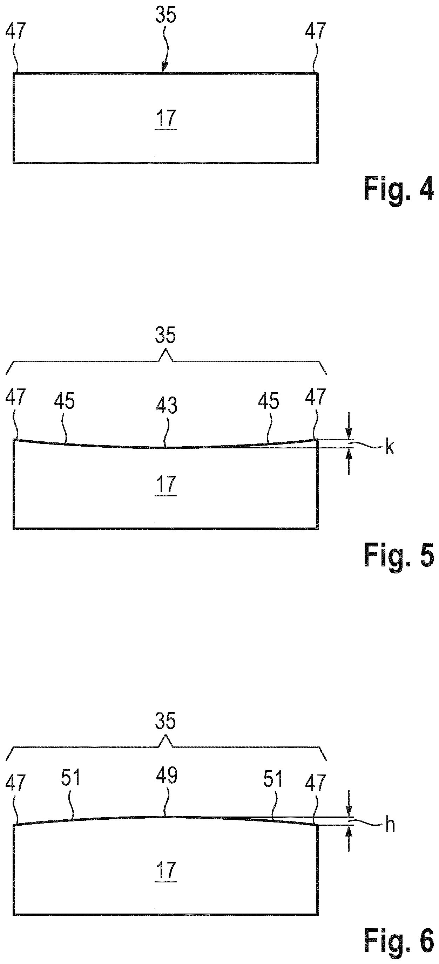

Gemäß der Fig. 3 ist die von den Längsrillen 37 unterbrochene Gurtband-Lauffläche 17 insgesamt konkav ausgebildet, und zwar mit einem in der Gurtband-Querrichtung mittigen Konturboden 43 (Figur 5), an dem beidseitig Konturflanken 45 (Figur 5) bis zu einem Laufflächen-Rand 47 hochgezogen sind. An den Laufflächen-Rand 47 schließt sich der jeweilige Gurtösen-Eckbereich 19 an. Mit Bezug auf den seitlichen Laufflächen-Rand 47 ist in der Fig. 2 der Konturboden 43 um eine Konturtiefe k (nur in der Figur 5 gezeigt) zurückgesetzt, die in einen Bereich zwischen 0,1 und 0,2mm liegt. Auf diese Weise ist der DurchlassQuerschnitt des Gurtband-Führungsspalts 27 in der Gurtbeschlag-Mitte am größten und reduziert sich dieser beidseitig in Richtung auf die jeweiligen Gurtösen-Freiräume 25.

Nachfolgend sind anhand der Fig. 4 bis 15 weitere Ausführungsvarianten der in der Gurtband-Lauffläche 17 ausgebildeten Oberflächenkontur 35 gezeigt: Demzufolge ist in der Fig. 4 die Oberflächenkontur 35 der Gurtband-Lauffläche 17 in der Gurtband-Querrichtung geradlinig sowie glattflächig ohne zusätzliche Längsrippen ausgebildet. In der Fig. 5 ist eine konkave Oberflächenkontur 35 gezeigt, bei der ein in der Gurtband-Querrichtung mittiger Konturboden 43 beidseitig über Konturflanken 45 bis zu einem Lauffläche-Rand 47 hochgezogen sind. Der Konturboden 43 ist mit Bezug auf den Laufflächen-Rand 47 um die Konturtiefe k zurückgesetzt, die zwischen 0,1mm und 2mm liegen kann.

In der Fig. 6 ist eine konvexe Oberflächenkontur 35 gezeigt, die in der Gurtband-Querrichtung einen mittigen Konturscheitel 49 aufweist, an dem beidseitig Konturflanken 51 bis zu dem Laufflächen-Rand 47 um eine Scheitelhöhe h abfallen.

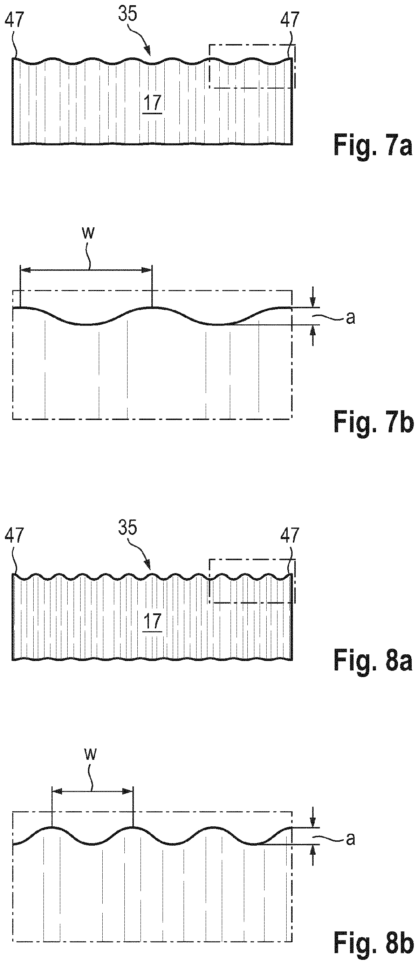

In der Fig. 7 weist die Oberflächenkontur 35 ein in der Gurtband-Lauffläche 17 ausgebildetes Wellenprofil mit einem sinusförmigen Verlauf in der Gurtband-Querrichtung auf, bei dem die Wellentäler um eine Amplitudenhöhe a von den Wellenbergen zurückgesetzt sind. In der Fig. 7 liegt die Amplitudenhöhe a bei 0,8mm. Die Wellenlänge w liegt in der Fig. 7 bei 6,9mm, so dass sich über die Laufflächen-Breite b hinweg insgesamt sechs Wellenberge ergeben.

In der Fig. 8 liegt die Amplitudenhöhe a des Wellenprofils bei 1,0mm, während die Wellenlänge w bei 4,0mm liegt. Auf diese Weise ergeben sich über die Laufflächen-Breite hinweg zwischen den beiden Laufflächen-Rändern 47 insgesamt elf Wellenberge.

In der Fig. 9 liegt die Amplitudenhöhe bei 0,5mm, während die Wellenlänge w bei 2,0mm liegt. Auf diese Weise ergeben sich in der Fig. 9 zwischen den beiden Laufflächen-Rändern 47 insgesamt 23 Wellenberge.

In der Fig. 10 weist die Oberflächenkontur 35 ein in der Gurtband-Lauffläche 17 ausgebildetes Rillenprofil auf, bei dem in die Gurtband-Lauffläche 17 Längsrillen 37 eingearbeitet sind. Diese sind in der Gurtband-Querrichtung über Längsrippen 39 voneinander beabstandet. Jede Längsrille 37 weist einen um eine Rillentiefe r von der Gurtband-Lauffläche 17 zurückgesetzten Rillenboden 41 auf. Vom Rillenboden 41 sind Seitenflanken 42 hochgezogen, die an bevorzugt gerundeten Übergangskanten 44 in die Gurtband-Lauffläche 17 übergehen. In der Fig. 10 liegt die Rillentiefe r bei 1,0mm, während die Längsrippen-Breite I bei 2,0mm liegt. Die Rillenbreite c liegt in der Fig. 10 bei 2,5mm. Insgesamt ergeben sich in der Fig. 10 zwischen den beiden Laufflächen-Rändern 47 insgesamt neun voneinander beabstandete Längsrippen 39.

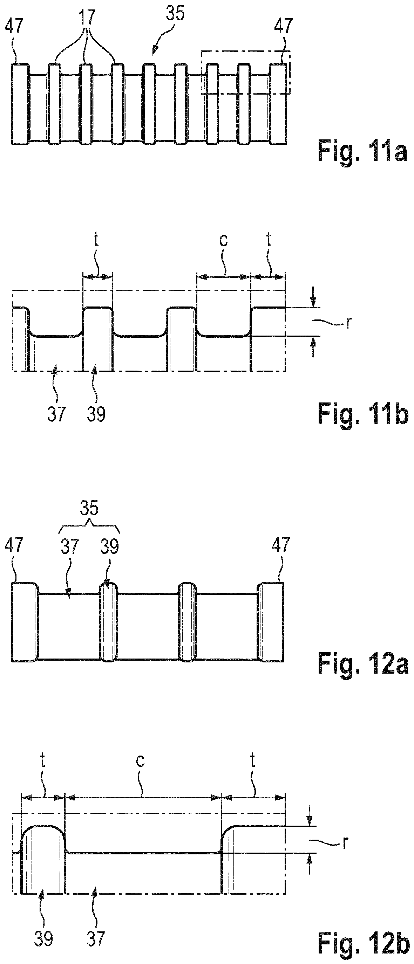

In dem in der Fig. 11 gezeigten Ausführungsbeispiel liegt die Rillentiefe r bei 2,0mm, während die Längsrippen-Breite I bei 2,0mm liegt. Die Rillenbreite c beträgt in der Fig. 11 3,0mm. Auf diese Weise ergeben sich zwischen den beiden Laufflächen-Rändern 47 insgesamt sieben voneinander beabstandete Längsrippen 39.

In der Fig. 12 ist ein weiteres Ausführungsbeispiel gezeigt, bei dem die Rillentiefe r bei 1,8mm liegt, während die Rippenbreite t bei 3,0mm liegt und eine Rillenbreite c bei 11,0mm liegt. Auf diese Weise ergeben sich zwischen den beiden Laufflächen-Rändern 47 insgesamt zwei voneinander beabstandete Längsrippen 39.

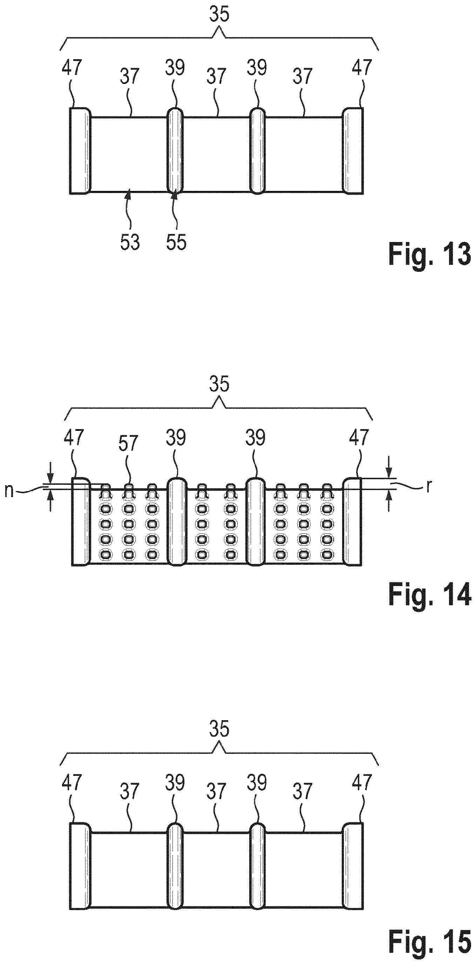

In der Fig. 13 ist der Gurtbeschlag 7 aus einem Metallkörper 53 und einer Kunststoff-Umspritzung 55 aufgebaut. Der Gurtband-Lauffläche 17 ist ebenfalls eine als Rippenstruktur realisierte Oberflächenkontur 35 zugeordnet. In der Fig. 13 sind die Rillenböden 41 der Längsrillen 37 jeweils vom Metallkörper 53 bereitgestellt, um eine Oberflächen-Rauigkeit der Rillenböden 41 zu reduzieren. Demgegenüber sind die Längsrippen 39 aus Kunststoffmaterial ausgebildet, das eine erhöhte Oberflächen-Rauigkeit aufweist.

In der Fig. 14 ist die Oberflächenkontur 35 ebenfalls als eine Rillenstruktur realisiert, bei der in den Rillenböden 41 jeweils Noppen 57 angeordnet sind. Diese ragen um eine Noppenhöhe n von den Rillenböden 41 ab. Die Noppenhöhe n ist in der Fig. 14 kleiner bemessen als die Rillentiefe r.

In der Fig. 15 sind die Rillenböden 41 der gezeigten Rippenstruktur durch Gummi, Kautschuk oder Elastomere bereitgestellt, wodurch die Rillenböden 41 einen erhöhten Reibungskoeffizienten aufweisen, und zwar im Vergleich zu dem Reibungskoeffizient der Gurtband-Lauffläche 17. Auf diese Weise wird im Lastfall eine erhöhte Haftreibung zwischen dem Gurtband und den Rillenböden 41 bereitgestellt, um das Gurtband in Position zu halten.

### Bezugszeichenliste

- 1: Schultergurtabschnitt
- 3: Beckengurtabschnitt
- 5: Gurtband
- 7: Gurtbeschlag
- 9: Steckzunge
- 11: Gurtschloss
- 13: Basisabschnitt
- 15: Gurtöse
- 17: Gurtband-Lauffläche
- 19: seitlicher Eckbereich
- 21: Gurtösen-Rand
- 23: Verdrängungskörper
- 25: Gurtösen-Freiraum
- 27: schmaler Gurtband-Führungsspalt
- 29: vorderer Gurtband-Auslauf
- 31: hinterer Gurtband-Auslauf
- 33: Stegfläche
- 35: Oberflächenkontur
- 37: Längsrillen
- 39: Längsrippen
- 41: Rillenboden
- 42: Seitenflanken
- 43: Konturboden
- 44: gerundete Übergangskanten
- 45: Konturflanken
- 47: Laufflächen-Rand
- 49: Konturscheitel
- 51: Konturflanken
- 53: Metallkörper
- 55: Kunststoff-Umspritzung
- 57: Noppen
- s: Spaltbreite
- b: Laufflächen-Breite
- r: Rillentiefe
- I: Rippenbreite
- t: Rippen-Breite
- k: Konturtiefe
- h: Scheitelhöhe
- a: Amplitudenhöhe
- w: Wellenlänge
- c: Rillenbreite
- n: Noppenhöhe
- F_{y}: Querlastkomponente

## Patentansprüche

1. Gurtbeschlag für eine Sicherheitsgurteinrichtung in einem Fahrzeug, mit einem Basisabschnitt (13) und einer davon abragenden Steckzunge (9), wobei der Basisabschnitt (13) eine Gurtöse (15) mit einer Gurtband-Lauffläche (17) aufweist, die bei angelegtem Sicherheitsgurt (5) in Gleitkontakt mit einem durch die Gurtöse (15) geführten Gurtband (5) ist, wobei die Gurtband-Lauffläche (17) in der Gurtband-Querrichtung beidseitig an seitlichen Eckbereichen (19) in einen, der Gurtband-Lauffläche (17) gegenüberliegenden Gurtösen-Rand (21) übergeht, und wobei die Gurtband-Lauffläche (17) eine Oberflächenkontur (35) aufweist, die in einem Lastfall eine stabile Gurtband-Querführung in der Gurtöse (15) bereitstellt, die einer auf das Gurtband (5) wirkenden Querlastkomponente (F_{y}) entgegenwirkt, **dadurch gekennzeichnet, dass** an dem der Gurtband-Lauffläche (17) gegenüberliegenden Gurtösen-Rand (21) ein Verdrängungskörper (23) ausgebildet ist, der eine Spaltbreite der Gurtöse (15) reduziert, und dass der Verdrängungskörper (23), in der Gurtbandquerrichtung betrachtet, beidseitig über einen Gurtband-Freiraum (25) vom jeweiligen seitlichen Gurtösen-Eckbereich (19) beabstandet ist.

2. Gurtbeschlag nach Anspruch 1, **dadurch gekennzeichnet, dass** zwischen der Gurtband-Lauffläche (17) und dem Verdrängungskörper (23) ein schlitzförmiger Gurtband-Führungsspalt (27) mit reduziertem Durchlassquerschnitt bereitgestellt ist, der in der Gurtbandquerrichtung beidseitig in den jeweiligen Gurtband-Freiraum (25) übergeht, der einen ausgeweiteten Durchlassquerschnitt aufweist, und dass insbesondere der jeweilige Gurtband-Freiraum (25) mit einer Profilhöhe vom Gurtband-Führungsspalt (27) in Richtung auf die Steckzunge (9) hochgezogen ist.

3. Gurtbeschlag nach Anspruch 1 oder 2, **dadurch gekennzeichnet, dass** die Oberflächenkontur (35) der Gurtband-Lauffläche (17), in der Gurtbandquerrichtung betrachtet, konkav ausgebildet ist, und dass die konkave Oberflächenkontur (35) in der Gurtbandquerrichtung einen mittigen Konturboden (43) aufweist, an dem beidseitig Konturflanken (45) bis zu einem Laufflächen-Rand (47) hochgezogen sind, und dass der Konturboden (43) mit Bezug auf den Laufflächen-Rand (47) um eine Konturtiefe (k) zurückgesetzt ist.

4. Gurtbeschlag nach Anspruch 1 oder 2, **dadurch gekennzeichnet, dass** die Oberflächenkontur (35) der Gurtband-Lauffläche (17), in der Gurtbandquerrichtung betrachtet, konvex ausgebildet ist, und dass die konvexe Oberflächenkontur (35) in der Gurtbandquerrichtung einen mittigen Konturscheitel (49) aufweist, an dem beidseitig Konturflanken (51) bis zu einem Laufflächen-Rand (47) um eine Scheitelhöhe (h) abfallen.

5. Gurtbeschlag nach Anspruch 1 oder 2, **dadurch gekennzeichnet, dass** die Oberflächenkontur (35) der Gurtband-Lauffläche (17) in der Gurtbandquerrichtung geradlinig ausgebildet ist.

6. Gurtbeschlag nach einem der vorhergehenden Ansprüche, **dadurch gekennzeichnet, dass** die Gurtband-Lauffläche (17) eine Laufflächen-Breite (b) von 46mm bis 50mm aufweist, und/oder dass die Gurtband-Lauffläche (17) unterteilt ist in einen an der Gurtbeschlag-Vorderseite ausgebildeten vorderen Gurtband-Auslauf (29) und in einen an der Gurtbeschlag-Rückseite ausgebildeten rückseitigen Gurtband-Auslauf (31), die an einer gerundeten Stegfläche (33) ineinander übergehen.

7. Gurtbeschlag nach einem der vorhergehenden Ansprüche, **dadurch gekennzeichnet, dass** die Oberflächenkontur (35) ein in der Gurtband-Lauffläche (17) ausgebildetes Wellenprofil mit einem sinusförmigen Verlauf in der Gurtbandquerrichtung aufweist, bei dem die Wellentäler um eine Amplitudenhöhe (a) von den Wellenbergen zurückgesetzt sind, und dass insbesondere die Amplitudenhöhe (a) in einem Bereich von 0,5mm bis 1,0mm ist und/oder die Anzahl der Wellenberge über die Laufflächen-Breite (b) in einem Bereich von 6 bis 23 liegt, und/oder dass die Wellenlänge (w) in einem Bereich von 2,0mm bis 6,9mm liegt.

8. Gurtbeschlag nach einem der vorhergehenden Ansprüche 1 bis 6, **dadurch gekennzeichnet, dass** die Oberflächenkontur (35) ein in der Gurtband-Lauffläche (17) ausgebildetes Rillenprofil aufweist, bei dem in die Gurtband-Lauffläche (17) Längsrillen (37) eingearbeitet sind, die in Gurtbandquerrichtung über Längsrippen (39) beabstandet sind, und dass insbesondere jede Längsrille (37) einen um eine Rillentiefe (r) von der Gurtband-Lauffläche (17) zurückgesetzten Rillenboden (41) aufweist, von dem Seitenflanken (42) hochgezogen sind, die an insbesondere gerundeten Übergangskanten (44) in die Gurtband-Lauffläche (17) übergehen, und dass insbesondere die Rillentiefe (r) in einem Bereich von 1,0mm bis 2,0mm liegt, eine Rippenbreite (t) in einem Bereich von 2,0mm bis 4,5mm liegt, und/oder dass eine Rillenbreite (c) in einem Bereich von 2,5mm bis 11mm liegt.

9. Gurtbeschlag nach Anspruch 8, **dadurch gekennzeichnet, dass** der Gurtbeschlag (7) aus zumindest einem Metallkörper (53) und einer Kunststoff-Umspritzung (55) aufgebaut ist, und dass insbesondere der Rillenboden (41) der jeweiligen Längsrille (37) des Rillenprofils vom Metallkörper (53) bereitgestellt ist zur Reduzierung einer Oberflächen-Rauigkeit des Rillenbodens (41), während die jeweilige Längsrippe (39) aus Kunststoffmaterial gebildet ist.

10. Gurtbeschlag nach Anspruch 8 oder 9, **dadurch gekennzeichnet, dass** der Rillenboden (41) der jeweiligen Längsrille (37) glattflächig ausgebildet ist, oder dass der Rillenboden (41) mit Noppen (57) ausgebildet ist, die um eine Noppenhöhe (n) vom Rillenboden (41) abragen, und dass insbesondere die Noppenhöhe (n) kleiner bemessen ist als die Rillentiefe (r).

11. Gurtbeschlag nach Anspruch 8, 9 oder 10, **dadurch gekennzeichnet, dass** der Rillenboden (41) der jeweiligen Längsrille (37) des Rippenprofils einen Reibungskoeffizienten aufweist, der größer als der der jeweiligen Längsrippe (39) ist.

## Claims

1. Belt fitting for a seat belt device in a vehicle, comprising a base portion (13) and an insertion tongue (9) projecting therefrom, the base portion (13) having a belt eyelet (15) that has a belt strap running surface (17) which, when the seat belt (5) is fastened, is in sliding contact with a belt strap (5) guided through the belt eyelet (15), the belt strap running surface (17) transitioning, in the belt strap transverse direction, on both sides at lateral corner regions (19), into a belt eyelet edge (21) opposite the belt strap running surface (17), and the belt strap running surface (17) having a surface contour (35) which, in a load case, provides stable belt strap transverse guidance in the belt eyelet (15), which guidance counteracts a transverse load component (F_{y}) acting on the belt strap (5), **characterized in that** a displacement body (23) is formed on the belt eyelet edge (21) opposite the belt strap running surface (17), which displacement body reduces a gap width of the belt eyelet (15), and **in that** the displacement body (23), viewed in the belt strap transverse direction, is spaced apart, on both sides, from the relevant lateral belt eyelet corner region (19) via a belt strap free space (25).

2. Belt fitting according to claim 1, **characterized in that** a slot-shaped belt strap guide gap (27) that has a reduced passage cross-section is provided between the belt strap running surface (17) and the displacement body (23), which guide gap transitions, in the belt strap transverse direction, on both sides, into the relevant belt strap free space (25), which has an enlarged passage cross-section, and **in that** in particular the relevant belt strap free space (25) is raised at a profile height from the belt strap guide gap (27) in the direction of the insertion tongue (9).

3. Belt fitting according to claim 1 or 2, **characterized in that** the surface contour (35) of the belt strap running surface (17), viewed in the belt strap transverse direction, is concave, and **in that** the concave surface contour (35) has, in the belt strap transverse direction, a central contour bottom (43), on both sides of which contour flanks (45) are raised up to a running surface edge (47), and **in that** the contour bottom (43) is set back by a contour depth (k) with respect to the running surface edge (47).

4. Belt fitting according to claim 1 or 2, **characterized in that** the surface contour (35) of the belt strap running surface (17), viewed in the belt strap transverse direction, is convex, and **in that** the convex surface contour (35) has, in the belt strap transverse direction, a central contour apex (49), on both sides of which contour flanks (51) extend down to a running surface edge (47) by an apex height (h).

5. Belt fitting according to claim 1 or 2, **characterized in that** the surface contour (35) of the belt strap running surface (17) is straight in the belt strap transverse direction.

6. Belt fitting according to any of the preceding claims,
**characterized in that** the belt strap running surface (17) has a running surface width (b) of from 46 mm to 50 mm, and/or **in that** the belt strap running surface (17) is divided into a front belt strap outlet (29) formed on the belt fitting front side and a rear belt strap outlet (31) formed on the belt fitting rear side, which outlets transition into one another at a rounded web surface (33).

7. Belt fitting according to any of the preceding claims, **characterized in that** the surface contour (35) has a wave profile formed in the belt strap running surface (17), which wave profile has a sinusoidal shape in the belt strap transverse direction, and in which wave profile the wave troughs are set back from the wave crests by an amplitude height (a), and **in that** in particular the amplitude height (a) is in a range from 0.5 mm to 1.0 mm and/or the number of wave crests over the running surface width (b) is in a range from 6 to 23, and/or **in that** the wave length (w) is in a range from 2.0 mm to 6.9 mm.

8. Belt fitting according to any of the preceding claims 1 to 6,
**characterized in that** the surface contour (35) has a groove profile formed in the belt strap running surface (17), in which groove profile longitudinal grooves (37) are incorporated into the belt strap running surface (17), which longitudinal grooves are spaced apart in the belt strap transverse direction via longitudinal ribs (39), and **in that** in particular each longitudinal groove (37) has a groove bottom (41) set back from the belt strap running surface (17) by a groove depth (r), from which groove bottom side flanks (42) are raised which transition into the belt strap running surface (17) at in particular rounded transition edges (44), and **in that** in particular the groove depth (r) is in a range from 1.0 mm to 2.0 mm, a rib width (t) is in a range from 2.0 mm to 4.5 mm, and/or **in that** a groove width (c) is in a range from 2.5 mm to 11 mm.

9. Belt fitting according to claim 8, **characterized in that** the belt fitting (7) is constructed from at least one metal body (53) and a plastics overmoulding (55), and **in that** in particular the groove bottom (41) of the relevant longitudinal groove (37) of the groove profile is provided by the metal body (53) in order to reduce a surface roughness of the groove bottom (41), while the relevant longitudinal rib (39) is formed from plastics material.

10. Belt fitting according to claim 8 or 9, **characterized in that** the groove bottom (41) of the relevant longitudinal groove (37) is formed to be smooth-surfaced, or **in that** the groove bottom (41) is formed with nubs (57) which project from the groove bottom (41) by a nub height (n), and **in that** in particular the nub height (n) is smaller than the groove depth (r).

11. Belt fitting according to claim 8, 9 or 10, **characterized in that** the groove bottom (41) of the relevant longitudinal groove (37) of the rib profile has a coefficient of friction which is greater than that of the relevant longitudinal rib (39).

## Revendications

1. Ferrure de ceinture pour un dispositif de ceinture de sécurité dans un véhicule, comportant une section de base (13) et une languette d'enfichage (9) dépassant de celle-ci, dans laquelle la section de base (13) présente un oeillet de ceinture (15) comportant une surface de roulement de sangle (17), qui, lorsque la ceinture de sécurité (5) est attachée, est en contact de glissement avec une sangle (5) guidée par l'œillet de ceinture (15), dans laquelle la surface de roulement de sangle (17) se prolonge dans la direction transversale de sangle des deux côtés sur des zones de coin latérales (19) dans un bord (21) d'oeillet de ceinture opposé à la surface de roulement de sangle (17) et dans laquelle la surface de roulement de sangle (17) présente un contour de surface (35), qui, dans un cas de charge, fournit un guidage transversal de sangle stable dans l'œillet de ceinture (15), qui s'oppose à une composante de charge transversale (F_{y}) agissant sur la sangle (5), **caractérisée en ce que** sur le bord (21) d'oeillet de ceinture opposé à la surface de roulement de sangle (17), un corps de refoulement (23) est conçu, qui réduit une largeur de fente de l'œillet de ceinture (15) **et en ce que** le corps de refoulement (23), vu dans la direction transversale de sangle, est espacé des deux côtés de la zone de coin (19) latérale respective d'oeillet de ceinture par l'intermédiaire d'un espace libre de sangle (25).

2. Ferrure de ceinture selon la revendication 1, **caractérisée en ce que,** entre la surface de roulement de sangle (17) et le corps de refoulement (23), une fente de guidage de sangle (27) en forme d'encoche comportant une section transversale de passage réduite est fournie, qui dépasse dans la direction transversale de sangle des deux côtés dans l'espace libre de sangle (25) respectif, qui présente une section transversale de passage élargie **et en ce que,** en particulier, l'espace libre de sangle (25) respectif est relevé avec une hauteur de profil depuis la fente de guidage de sangle (27) en direction de la languette d'enfichage (9).

3. Ferrure de ceinture selon la revendication 1 ou 2, **caractérisée en ce que** le contour de surface (35) de la surface de roulement de sangle (17), vu dans la direction transversale de sangle, est conçu concave **et en ce que** le contour de surface (35) concave présente dans la direction transversale de sangle un fond de contour (43) central, sur lequel des flancs de contour (45) sont relevés des deux côtés jusqu'à un bord (47) de surface de roulement **et en ce que** le fond de contour (43) est en retrait d'une profondeur de contour (k) par rapport au bord (47) de surface de roulement.

4. Ferrure de ceinture selon la revendication 1 ou 2, **caractérisée en ce que** le contour de surface (35) de la surface de roulement de sangle (17), vu dans la direction transversale de sangle, est conçu convexe **et en ce que** le contour de surface (35) convexe présente dans la direction transversale de sangle un sommet de contour (49) central, sur lequel des flancs de contour (51) descendent des deux côtés d'une hauteur de sommet (h) jusqu'à un bord (47) de surface de roulement.

5. Ferrure de ceinture selon la revendication 1 ou 2, **caractérisée en ce que** le contour de surface (35) de la surface de roulement de sangle (17) est conçu en ligne droite dans la direction transversale de sangle.

6. Ferrure de ceinture selon l'une des revendications précédentes, **caractérisée en ce que** la surface de roulement de sangle (17) présente une largeur (b) de surface de 46 mm à 50 mm, **et/ou en ce que** la surface de roulement de sangle (17) est divisée en une sortie de sangle (29) avant conçue sur le côté avant de la ferrure de sangle et une sortie de sangle (31) arrière sur le côté arrière de la ferrure de ceinture, qui se rejoignent au niveau d'une surface d'âme (33) arrondie.

7. Ferrure de ceinture selon l'une des revendications précédentes, **caractérisée en ce que** le contour de surface (35) présente un profil ondulé conçu dans la surface de roulement de sangle (17) comportant un tracé sinusoïdal dans la direction transversale de sangle, dans lequel les creux d'ondulation sont en retrait des crêtes d'ondulation d'une hauteur d'amplitude (a) **et en ce que,** en particulier, la hauteur d'amplitude (a) se situe dans une plage de 0,5 mm à 1,0 mm et/ou le nombre de crêtes d'ondulation sur la largeur (b) de surface de roulement se situe dans la plage de 6 à 23 **et/ou en ce que** la longueur d'ondulation (w) se situe dans une plage de 2,0 mm à 6,9 mm.

8. Ferrure de ceinture selon l'une des revendications précédentes 1 à 6, **caractérisée en ce que** le contour de surface (35) présente un profil rainuré conçu dans la surface de roulement de sangle (17), dans lequel des rainures longitudinales (37) sont usinées dans la surface de roulement de sangle (17), qui sont espacées dans la direction transversale de sangle par des nervures longitudinales (39) **et en ce que,** en particulier, chaque rainure longitudinale (37) présente un fond de rainure (41) en retrait d'une profondeur de rainure (r) de la surface de roulement de sangle (17), à partir duquel les flancs latéraux (42) sont élevés, qui se raccordent la surface de roulement de sangle (17) au niveau d'arêtes de transition (44) en particulier arrondies **et en ce que,** en particulier, la profondeur de rainure (r) se situe dans une plage de 1,0 mm à 2,0 mm, une largeur de nervure (t) se trouve dans une plage de 2,0 mm à 4,5 mm **et/ou en ce qu'**une largeur de rainure (c) se trouve dans une plage de 2,5 mm à 11 mm.

9. Ferrure de ceinture selon la revendication 8, **caractérisée en ce que** la ferrure de ceinture (7) est construite à partir d'au moins un corps métallique (53) et un surmoulage en plastique (55) **et en ce que,** en particulier, le fond de rainure (41) de la rainure longitudinale (37) respective du profil rainuré est fourni par le corps métallique (53) pour la réduction d'une rugosité de surface du fond de rainure (41), tandis que la nervure longitudinale (39) respective est formée à partir de matériau en plastique.

10. Ferrure de ceinture selon la revendication 8 ou 9, **caractérisée en ce que** le fond de rainure (41) de la rainure longitudinale (37) respective est conçue à surface lisse **ou en ce que** le fond de rainure (41) est conçu avec des picots (57), qui dépassent d'une hauteur de picot (n) du fond de rainure (41) **et en ce que,** en particulier, la hauteur de picot (n) est dimensionnée plus petite que la profondeur de rainure (r).

11. Ferrure de ceinture selon la revendication 8, 9 ou 10,
**caractérisée en ce que** le fond de rainure (41) de la rainure longitudinale (37) respective du profil rainuré présente un coefficient de frottement qui est supérieur à celui de la nervure longitudinale (39) respective.
